# EUROPEAN PATENT APPLICATION

(11) **EP 2 551 888 A2**
(43) Date of publication of application: **30.01.2013**
(21) Application number: 12175969.0
(22) Date of filing: 11.07.2012
(51) Int. Cl.: H01J 17/30

(54) **Electric discharge apparatus**

(30) Priority: 28.07.2011 GB 201112958
(71) Applicant: Rolls-Royce plc, London SW1E 6AT (GB)
(72) Inventor: Zizzo, Claudio, Derby, Derbyshire DE22 1BP (GB)
(74) Representative: Yeomans, Victoria Jane Anora

(57) **Abstract**

The invention relates to a gas discharge tube (30) of a type that may be used for example in gas turbine engine (10) ignition systems. The gas discharge tube (30) has an envelope (42) containing a gas therein and the envelope has a pair of spaced electrodes (38, 40) for application of an electric potential difference across the gas. An electromagnetic radiation source (44), such as a deep UV light source, is arranged to emit photons (50) into the envelope (42) so as to initiate ionisation of the gas, thereby reducing the potential difference required to cause electrical conductance between the electrodes. The electromagnetic radiation source, which may comprise light emitting diodes, may be selectively controlled.

## Description

The present invention relates to electric discharge apparatus and more specifically to gas discharge tubes for industrial or engineering applications.

Gas discharge tubes (GDT) are used in a number of industrial applications where a current discharge path is required to be created if or when a predetermined high voltage threshold is reached. In some applications, such as within telecommunications networks or power transmission networks, the selective activation of a GDT can provide protection against the detrimental impact of power surge or other unwanted transients. Gas discharge tubes are also used within ignition systems for engines, such as gas turbine engines.

For a number of applications, it is necessary for the GDT to discharge within a tight tolerance of the intended threshold voltage. Accordingly the so-called breakdown voltage of the GDT must be accurately tailored to suit the threshold voltage for the system in which it is used. The GDT must also operate reliably and predictably at the same breakdown voltage over its intended life cycle.

In the example of an engine ignition unit, the voltage breakdown is linked to a number of other critical system characteristics. If the breakdown voltage is too high then it will take a longer, and possibly unacceptable, time for that voltage to be achieved by the charge electronic circuitry. Also a higher energy level would also be achieved, thus shortening the life of the ignitor or other associated components. Conversely, if discharge occurs before a minimum voltage has been achieved, then insufficient energy would be released by ignitor plug for ignition.

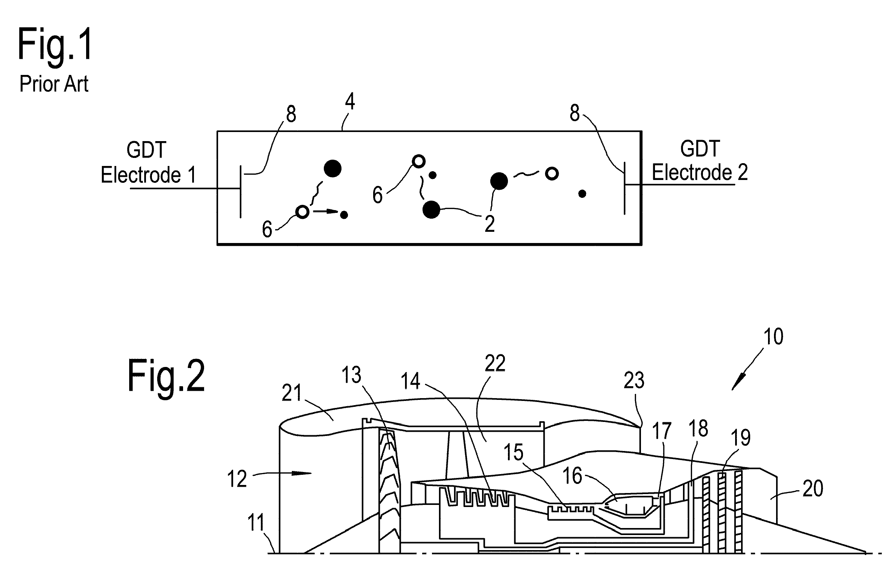

In order to achieve the desired breakdown voltage tolerance, radioactive materials, such as Tritium and/or Krypton 85, have conventionally been used within the gas discharge tube. An example of such a conventional arrangement is shown in Figure 1, in which radioactive material 2 contained within the GDT 4 emits radiation which is absorbed by the gas molecules 6 within the tube. This radiation assists the ionisation of the gas, achieving so-called pre-ionisation, such that the electrical breakdown is achieved reliably upon application of the intended voltage between the GDT electrodes 8.

A practical implementation of such a process within the ignition system for a gas turbine engine is more fully described in GB 733,213.

However the ongoing concerns over the use of radioactive materials and the safety implications thereof has led to a requirement for equipment manufacturers to remove radioactive materials from new products. This is in line with guidance issued by the nuclear safety authorities.

Without the ionising radioactive material, conventional GDT's would cease to be suitable for purpose in a number of applications or else would have significant impact on the operation or lifecycle of the system due to the significantly wider voltage range over which discharge could occur. However the removal of gas discharge tubes would require implementation of more complex and expensive competing technology such as solid state power switches and associated control circuitry. Currently, the reliability of such competing technology is also questionable.

It is an aim of the present invention to provide a gas discharge tube which overcomes or at least mitigates some of the above problems.

The present invention derives from the premise that an electric UV light source can be used to foster ionisation of the gas within a GDT and thereby avoid the use of radioactive materials.

According to one aspect of the present invention there is provided an electric discharge apparatus comprising an envelope containing a gas therein, the envelope having a pair of spaced electrodes for applying an electric potential difference across the gas, and an electromagnetic radiation source arranged to emit energy in the range 1-100eV into the envelope so as to initiate ionisation of the gas, thereby reducing the potential difference across the electrodes required to initiate electric discharge by the gas.

The electromagnetic radiation source may be selectively operable. The electromagnetic radiation source may be an electrically operated light source. The electromagnetic radiation source may comprise one or more light emitting diode (LED). The electromagnetic radiation source may be optically coupled with the envelope.

According to one embodiment, the electromagnetic radiation source may be electrically or electronically controlled. A controller may control the supply of power to the electromagnetic radiation source. In a preferred embodiment, the electromagnetic radiation source is selectively controllable by the controller. The controller may be arranged to control operation of the electromagnetic radiation source in response to electrical readings from an electrical system, circuit or network associated with, or connected to, the discharge apparatus. The controller may be arranged to control operation of the electromagnetic radiation source in response to a sensed electric potential difference across the electrodes. The sensed potential difference may be a previous breakdown voltage.

In contrast to the provision of radioactive material conventionally used in GDT, an electromagnetic radiation source, such as an LED or similar, is actively and selectively controllable to irradiate the gas within the envelope on demand. This allows the discharge apparatus to be responsive to changing sensed conditions. In one embodiment the discharge apparatus may be adaptable. The controller may control not only the activation or deactivation of the electromagnetic radiation source but also the rate at which energy is supplied to the gas by the electromagnetic radiation source. This feature may beneficially be used to affect any, or any combination, of: the level of ionization of the gas; the electrical breakdown voltage; and/or, the energy delivered to the ignition plug.

In one embodiment, the electromagnetic radiation source comprises an array of electromagnetic radiation sources which may be individually controllable.

The controller may control ionisation of the gas within the envelope only for a time period sufficient to achieve a desired electric discharge from the gas.

The electromagnetic radiation source may emit energy in the range of 1-100 eV. In one embodiment, the energy is in the range of 1-50 or, more typically, 1-20 or 1-10 eV. An energy level in the region of at least few eV is generally preferred.

The electromagnetic radiation source may emit electromagnetic radiation having a wavelength in the region of 10 to 600 nm or, more typically, in the region of 50 to 500 nm or else 150 to 450 nm.

The electromagnetic radiation source may be a light source.

The electromagnetic radiation source may comprise a violet or ultra violet (UV) light source, which may for example be a deep UV light source. The light source may emit UV light of a wavelength which can be defined to lie within any or any combination of ranges associated with Near, Middle, Far, Vacuum, Low, Super or Extreme UV light.

The electric discharge apparatus according to the invention may be used within or as part of a high power handling system, which may comprise for example switching voltages of a magnitude in the range of 1 to 10 kV and/or switching currents in the range of 0.5 to 3kA. The power handling system may comprise a charge storing device, such as a capacitor. The controller may control operation of the electromagnetic radiation source based upon a current level of charge of the charge storing device.

The electric discharge apparatus may be referred to as a gas discharge tube or spark gap switch.

According to a further aspect of the invention there is provided an ignition system, such as a spark or engine ignition system, comprising an electric discharge apparatus according to the first aspect.

The ignition system may comprise an electric charge storing device. The ignition system may comprise a capacitor discharge ignition system, which may comprise an ignitor plug. The ignition system may comprise a gas turbine engine ignition system. There may be provided a combustor comprising the ignition system.

According to a further aspect of the invention, there is provided a gas turbine engine comprising electric discharge apparatus according to the first aspect.

According to a further aspect of the invention, there is provided a surge protection system comprising electrical discharge apparatus according to the first aspect.

The electrical discharge apparatus according to any aspect is free of radioactive materials.

One or more practicable embodiments of the present invention are described in further detail below with reference to the accompanying drawings of which:
Figure 1 shows a gas discharge tube according to the prior art;
Figure 2 shows a half longitudinal section of a gas turbine engine in which an embodiment of the present invention may be provided;
Figure 3 shows a schematic of an ignition system according to an embodiment of the present invention;
Figure 4 shows a schematic of electric discharge apparatus according to an embodiment of the invention; and,
Figure 5 shows a table of UV light wavelengths which may be suited to the present invention.

Turning firstly to Figure 2, there is shown a ducted fan gas turbine engine, generally indicated at 10. The engine 10 has a principal and rotational axis 11 and comprises, in axial flow series, an air intake 12, a propulsive fan 13, an intermediate pressure compressor 14, a high-pressure compressor 15, combustion equipment 16, a high-pressure turbine 17, and intermediate pressure turbine 18, a low-pressure turbine 19 and a core engine exhaust nozzle 20. A nacelle 21 generally surrounds the engine 10 and defines the intake 12, a bypass duct 22 and a bypass exhaust nozzle 23.

The gas turbine engine 10 works in a conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high, intermediate and low-pressure turbines 17, 18, 19 respectively drive the high and intermediate pressure compressors 15, 14 and the fan 13 by suitable interconnecting shafts.

Alternative gas turbine engine arrangements may comprise a two, as opposed to three, shaft arrangement and/or may provide for different bypass ratios. Other configurations known to the skilled person include open rotor designs, such as turboprop engines, or else turbojets, in which the bypass duct is removed such that all air flow passes through the core engine. The various available gas turbine engine configurations are typically adapted to suit an intended operation which may include aerospace, marine, power generation amongst other propulsion or industrial pumping applications.

The combustion equipment 16 generally comprises one or more fuel injectors and ignitors mounted relative to a combustion chamber, such that fuel entering the combustion chamber via a fuel injector nozzle is ignited upon mixing with the compressed air from the upstream compressors. Since continuous combustion takes place within the combustion chamber in use, the ignitor is typically only required to operate upon start up of the engine or else if it is necessary to restart combustion.

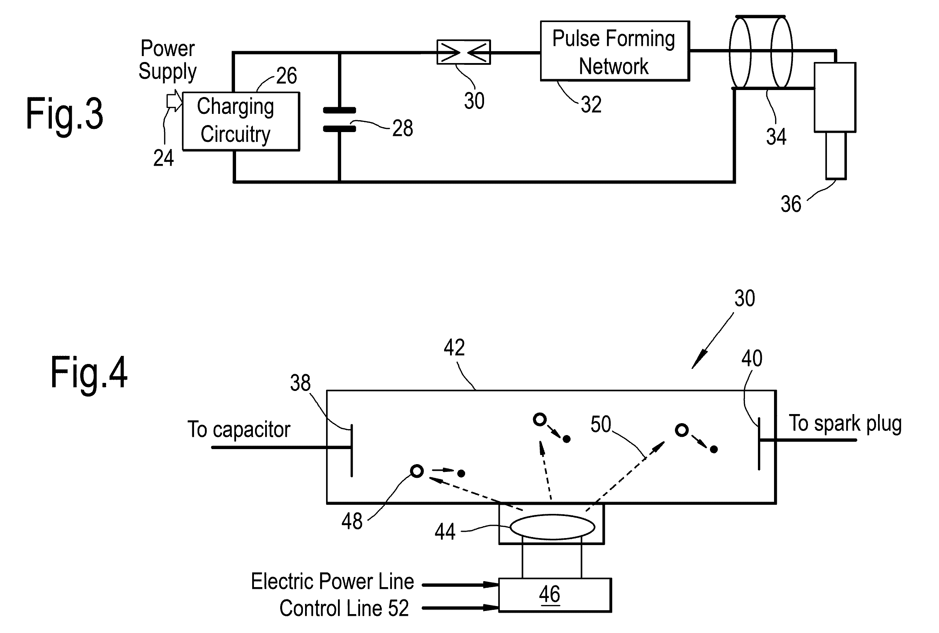

In Figure 3, there is shown a circuit schematic of an embodiment of an ignition system according to the present invention. The system comprises a connection 24 to an electric power source for the supply of power to the ignition system. A charging circuit 26 is electrically connected between the power source and a capacitor 28, which may comprise a suitably high voltage capacitor, such as a tank capacitor. A plurality of capacitors may be provided.

The power supply in the present embodiment may derive directly from the aircraft power supply and may be of tens or hundreds of volts, which is typically sufficient for operation of the charging circuitry of the ignition system.

The capacitor 28 is connected in series with a gas discharge tube 30 according to one embodiment of the invention. The gas discharge tube 30 is connected in turn to a pulse forming circuit 32, a high voltage lead 34 and a spark plug 36.

In use, the charging circuit 26 charges the high voltage capacitor to a predetermined desired level of charge. Below the breakdown voltage of the GDT 30, the discharge tube will prevent discharge by the capacitor. When the voltage on the high voltage capacitor reaches the breakdown voltage of the GDT, the GDT gas becomes an electrically low resistive path allowing the capacitor to discharge. Accordingly, the predetermined level of charge to which the capacitor is charged by the charging circuit may correspond to the breakdown voltage of the GDT.

The capacitor discharges its output via the high voltage ignition lead 34, generating an arc at the spark plug 36. A suitable, and typically conventional, circuit 32 for shaping the pulses to this effect is provided as will be understood by the person skilled in the art. The circuit 32 is intended to smooth the output from the GDT 30 to the spark plug 36, typically to reduce the peak thereof, and may comprise a capacitor inductor arrangement. This may be used for example to meet electromagnetic compatibility (EMC) requirements. However in alternative embodiments, the circuit 32 may not be needed.

Connected between the capacitor 28 and the high voltage lead 34 is gas discharge tube 30, comprising a spark gap, across which current must pass en route to the spark plug 36. Further details of the gas discharge tube 30 are shown in Figure 4. The GDT comprises spaced electrodes 38 and 40 which are mounted within a gas-filled envelope in the form of a tube 42. The electrodes are connected to adjacent portions of the system shown in Figure 3, that is with a first electrode in electrical connection with the capacitor 28 and the second electrode in connection with the high voltage lead and spark plug via pulse forming network 32. However there are many different circuit topologies within which the GDT can be used within an ignition system as will be understood by the person skilled in the art.

The tube 42 is typically formed of a glass or ceramic. The gas, or gas mixture, within the tube may comprise any conventional gas used in relatively high voltage gas discharge tubes, such as, for example Hydrogen, Deuterium or a noble gas. It will be appreciated by the skilled person that any conventional gas may be used for the purpose of the present invention and that the pressure of the gas inside the tube, as well as the gas selection itself, can be tailored to provide a desired breakdown voltage and recovery time.

In use, when the voltage across electrodes 38 and 40 reaches a certain voltage defined by the dielectric withstand capability of the gas mixture inside the GDT, a low impedance path is created and the current is suddenly able to cross between the two electrodes. In order to tailor this effect to best suit system needs, a light source 44 is provided which is capable of emitting a suitable wavelength of light into the tube 42 to ionize the gas therein and thereby generate free electric charges in the form of free electrons.

In the exemplary GDT in Figure 4, an ultra violet source 44 can be controlled by an electronic controller 46, which may be a dedicated controller or else which may be the same controller that is used for controlling the charging circuit 26 as described above. Various embodiments of control are available for the light source as will be described below. However the fundamental feature that the controller can regulate the voltage/current supplied to the light source so as to selectively and/or variably control the operation thereof provides the present invention with advantages over the use of radioactive material according to the prior art.

The type of electronic controller 46 used will depend on the type of light source it is intended to control. For example, if a deep UV LED light source is used then the controller will typically be an LED drive controller. In such an example, the LED light can be pulsed to further reduce the power dissipated of the ignition unit and the duration of emission of the light of the LED's, thereby extending the operational life of the unit (LED and/or ignition system). In one embodiment, the light source may be switched on and off according to a predetermined frequency and/or duration. In such an embodiment, the frequency of operation of the light source will typically be an order of magnitude, or more, greater than the frequency of the charge/discharge cycle of the capacitor such that the pulsing operation of the light source will not significantly delay spark generation once the capacitor is charged. This embodiment also offers a simple and robust way of reducing the duty cycle of the LED's. In another embodiment, the controller may be arranged to sense the level of charge on the capacitor or else may receive a signal from the charging circuit such that the light source can be operated by controller 46 only at the point at which discharge is required.

In an additional or alternative embodiment, the variable control of the light source can be used to dynamically tailor the operation of the GDT according to sensed conditions. For example, the LED output can be modulated so as to vary the number of photons emitted per second, or else the power of the light source. Accordingly, greater or reduced levels of emission (radiant flux) from the light source can be used to vary the breakdown voltage for the GDT and thereby require a greater or reduced potential difference for operation of the ignitor. This effect may account for specific application requirements, such as a desired increase in energy delivered at the spark plug or to compensate for an aging spark plug, or else to provide for different discharge characteristics for different modes of operation.

The increase of the level of emission by the light source can be used to increase the frequency of discharge by the GDT (at a relatively lower energy spark at the plug 36). Conversely, a reduction in emission by the light source would increase the breakdown voltage and thereby cause the capacitor to discharge less often, but with greater spark energy. Examples of scenarios in which it may be desirable for ignitor operation to depart from a normal operation condition comprise running in heavy rain, re-light of the combustor at altitude or else a second or subsequent attempt at ignition after a failed initial attempt.

Whilst the light source 44 of Figure 4 is shown as being attached to the discharge tube itself (or else integral therewith), it should be noted that the optical coupling of the UV light to the GDT can be in a number of alternative ways, for example by mounting a separate light source relative to the GDT to irradiate the interior thereof via an UV transparent window or else by locating the light source remotely of the GDT (for example in a more benign environment) and optically coupling the light source to the GDT via suitable optical transmission means, such as a fiber optic link. This option is particularly suited to scenarios in which the ignition occurs in a high-temperature environment, for example close to the engine combustor or core, which could adversely affect the life of the light source and/or controller. Furthermore it is possible that the light source can be accommodated within an existing GDT package or design of either a glass or ceramic envelope type.

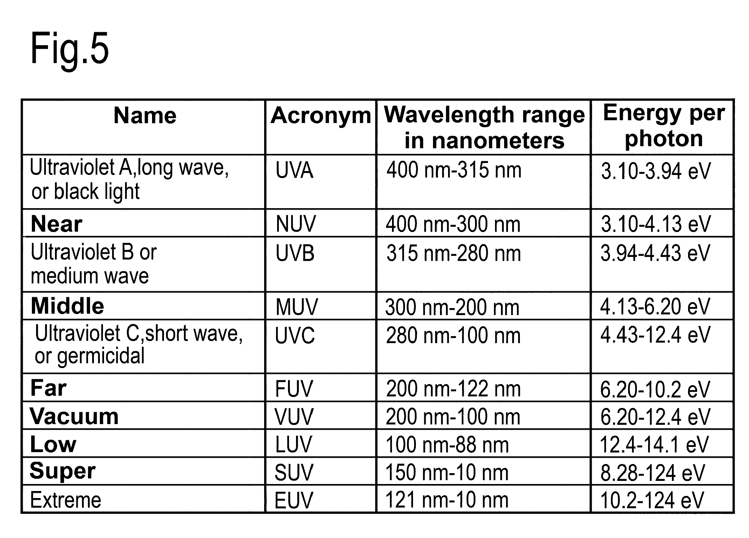

It has been determined that, dependent on the gas make-up in the tube, a light source providing approximately 1-10 eV per photon may be sufficient to ionise the gas in accordance with the principles of the present invention. Such an energy requirement could potentially encompass light sources which emit light of a shorter wavelengths in the visible spectrum, such as for example blue or violet light (380-475 nm). However developments in light sources, and particularly LED technology, allows UV light sources to be considered since they can provide a greater energy per photon. Accordingly the possible wavelengths that may be particularly well suited to implementation within the present invention are indicated in the table of Figure 5. The term "light" as used herein should be construed accordingly.

It will be appreciated that the overlapping nature of the indicated ranges means that one or more light source may be provided, which emit light of wavelengths which fall within a plurality of the indicated ranges.

The ultimate decision as to which wavelengths are best suited will be governed not only by the effectiveness of ionization but also based on the cost and reliability/life of the light source. At present a range of approximately 150-400 nm or 3-10 eV is considered to provide an appropriate balance of those factors.

The operation of the ignitor system is now described with reference to Figures 3 and 4. First, the system voltage is applied to the primary of a transformer to raise the voltage to the desired level allowing the charging circuitry to charge the high voltage capacitor.

When the gas mixture 48 within the tube 42 of Figure 4 is irradiated with photons 50 of sufficient energy, the gas becomes ionized such that electrons break free of the gas atoms/molecules, resulting in the presence of free electric charges within the tube 42. The application of a sufficient potential difference across the gap between electrodes 38 and 40 from the capacitor whilst the gas is ionised results in breakdown of the gas 48 and a pulse or surge of electricity across the spark gap of the GDT to the spark plug 36.

This pulse of electricity is conditioned or "shaped" by the pulse forming network 32 and via the high voltage lead 34 it passes to the spark plug 36, where it is sufficient to arc across a gap between the spark plug electrodes (not shown) to produce a spark which is used to ignite fuel in the combustion chamber.

When electrical conduction is achieved in the GDT 42, the voltage across the electrodes 38, 40 suddenly drops. Once the surge of current has passed, the spark gap within the GDT ceases conducting and the controller can cease operation of the light source 44. Conversely the light source can be left permanently on to simplify the control circuitry but at the expense of increased power dissipation and reduced life of the light source.

The charging circuit 26 constantly charges the capacitor 28. Therefore the process of charge and discharge of the capacitor, followed by the operation of the GDT and spark plug in sequence can be repeated over a time period for which sparks are to be generated. The frequency at which sparks are generated is controlled simply by the rate of charge of the capacitor and the breakdown voltage of the GDT. This results in a robust and reliable electrical system which will continue to operate as long as power is supplied to the charging circuit 26.

Since the distance of the gap between the two electrodes 38, 40 in the GDT is known as well as the composition and pressure of the gases inside the envelope, the voltage at which this spark gap will break down to allow the passage of current can be predetermined and tailored as required.

In a further embodiment of the invention, the GDT and ignition system of Figures 3 and 4 may be tailored to provide a "spark on demand" feature. As discussed above, the rate at which a spark is produced by the spark plug is determined by the charging cycle of the capacitor. This may produce ignition sparks at a frequency having an order of magnitude of approximately 1 Hz. Whilst such a frequency is suitable for normal use (for example, ignition prior to take off), there are scenarios in which it may be desirable to produce a spark more quickly.

For example, if combustion ceases in flight (due to water or ice ingestion or any other reason) and re-ignition of the engine is required, the time required to relight the engine is of paramount importance. Conventionally, it would be necessary to wait for a full charge time, which could be in the region of one second, before the first spark is generated.

However according to one embodiment of the present invention, the breakdown voltage of the GDT (without pre-ionisation) can be set such that it is greater than the voltage achieved by the predetermined capacitor charge level. Since the pre-ionisation of the gas can be achieved selectively according to the present invention, the capacitor can be held for an ongoing period of time in a charged state since it will not be allowed to discharge by the GDT until the light source is activated. In such a configuration, if re-ignition of the engine is required, the light source can be switched on such that the capacitor can discharge from a fully-charged condition immediately and thereby generate a spark at the spark plug without the need to wait for a full charge cycle. By way of comparison, the switching time for the gas discharge tube is in the order of a few microseconds.

This provides a particularly advantageous and surprising use for the present invention which can serve to reduce re-ignition or re-discharge time. Such an embodiment is characterised by the capacitor charge level, to which the charging circuit is set, being below the GDT breakdown voltage (without pre-ionisation) but above the breakdown voltage when pre-ionisation is achieved. That is to say the actuation of the light source is sufficient to reduce the breakdown voltage to below the voltage on the capacitor.

In view of the above, it can be seen that the invention allows for replacement of radioactive material used in a GDT with an optically coupled light source (e.g. deep UV LEDs) which generate photons with enough energy to cause ionization of the gas within the GDT. By controlling the optically coupled UV light source the overall power to the unit can be kept low, such that the UV light source need only be turned on when the GDT needs to function. The power UV light source can be pulsed, thus limiting the average power consumption and increasing the life of the unit. Also there is scope to modulate the voltage breakdown and/or speed of discharge through the control of the optical light output of the UV source.

The invention allows the use of GDT technology in high voltage/high energy applications substantially without increasing the complexity of the product or affecting its reliability, size or cost. In the context of the present invention, high power handling scenarios may comprise any or any combination of switching voltages of the order of 1 to 5 KV; switching currents of the order of 0.8 to 2 KA; peak power of the order of 100 KW. Additionally or alternatively the present invention may be relevant for scenarios which require fast switching times, of the order of 2 to 5 µSeconds. Whilst a switching voltage in the region of 2 to 5 kV is particularly suited to the embodiments described above, the gas discharge tube of the present invention can be scaled up to suit much larger voltage requirements. Accordingly it may be more appropriate to define high power or voltage scenarios with respect to a minimum switching voltage of approximately 1 kV.

Whilst the present invention finds particular application in the context of 1 to 20 Joule ignition systems, the present invention may also be suited to surge protection applications in telecommunications and power transmission industries, in particular where breakdown voltage tolerance is an important consideration. GDT circuits according to the present invention could be developed with superior control over one or more GDT characteristics, such as spark/current over voltage, glow time, arc region decay time or variable and voltage breakdown value.

## Claims

1. Electric discharge apparatus comprising:
an envelope (42) containing a gas therein, the envelope (42) having a pair of spaced electrodes (38, 40) for application of an electric potential difference across the gas; and,
an electromagnetic radiation source (44) arranged to emit energy in the range 1-100eV into the envelope (42) so as to initiate ionisation of the gas, thereby reducing the potential difference required to initiate electrical conductance between the electrodes (38, 40).

2. Electric discharge apparatus according to claim 1, wherein the electromagnetic radiation source (44) is selectively operable by a controller (46).

3. Electric discharge apparatus according to claim 2, wherein the controller (46) is arranged to control operation of the electromagnetic radiation source (44) in response to readings from an electrical system connected to the discharge apparatus.

4. Electric discharge apparatus according to any one of claims 2 to 3, wherein the controller (46) is arranged to intermittently operate the electromagnetic radiation source (44) in a pulsed manner.

5. Electric discharge apparatus according to any one of claims 2 to 3, wherein the controller (46) is arranged to selectively control the maximum radiant power of the electromagnetic radiation source (44).

6. Electric discharge apparatus according to any preceding claim, wherein the electromagnetic radiation source (44) comprises one or more light emitting diodes.

7. Electric discharge apparatus according to any preceding claim, wherein the electromagnetic radiation source (44) emits energy in the region of 1 to 10 eV.

8. Electric discharge apparatus according to any preceding claim, wherein the electromagnetic radiation source (44) emits radiation of a wavelength in the region of 150 to 450 nm.

9. Electric discharge apparatus according to any preceding claim, wherein the electromagnetic radiation source (44) is a deep UV light source.

10. Electric discharge apparatus according to any preceding claim, wherein the electromagnetic radiation source (44) is located remotely of the envelope (42) and optically coupled thereto.

11. Electric discharge apparatus according to any preceding claim, comprising a gas discharge tube (30).

12. An ignition system comprising:
a charge storing device (28) arranged for connection to a power supply (24);
a gas discharge tube (30) comprising an envelope (42) containing a gas therein, the envelope (42) having a pair of spaced electrodes (38, 40) and an electromagnetic radiation source (44) arranged to emit energy in the range 1-100eV into the envelope (42) so as to initiate ionisation of the gas; and,
an ignitor (36),
wherein a first electrode (38) of the gas discharge tube (30) is connected to the charge storage device (28) and a second electrode (40) is connected to the ignitor (36) such that an electrical discharge from the charge storage device (28) can be conducted between the electrodes (38, 40) via the ionised gas to the ignitor (36).

13. An ignition system according to claim 12, wherein the electromagnetic radiation source (44) is selectively operable and the charge storage device (28) is arranged to be charged to a predetermined charge level, said predetermined level of charge being insufficient to cause electrical conduction through the gas discharge tube (30) when the electromagnetic radiation source (44) is inoperative such that the charge storage device (28) is prevented from discharging until the electromagnetic radiation source (44) is operative.

14. A gas turbine engine (10) comprising a combustion chamber (16) and an ignition system according to any one of claims 12 to 13, the ignitor (36) being located relative to the combustion chamber (16) for ignition of a fuel and air mixture therein.

15. An electrical protection system having electric discharge apparatus for protecting one or more components from voltage fluctuations, the electric discharge apparatus comprising:
an envelope (42) containing a gas therein, the envelope (42) having a pair of spaced electrodes (38, 40) for application of an electric potential difference across the gas; and,
an electromagnetic radiation source (44) arranged to emit energy in the range 1-100eV into the envelope (42) so as to initiate ionisation of the gas, thereby reducing the potential difference required to initiate electrical conductance between the electrodes (38, 40).
